# EUROPEAN PATENT APPLICATION

(11) **EP 1 271 866 A2**
(43) Date of publication of application: **02.01.2003**
(21) Application number: 02004104.2
(22) Date of filing: 25.02.2002
(51) Int. Cl.: H04L 25/02, H04L 12/437, H04L 25/08, H04L 1/00

(54) **A fault tolerant shared transceiver apparatus and associated system**

(30) Priority: 29.06.2001 GB 0116042
(71) Applicant: MOTOROLA, INC., Schaumburg, IL 60196 (US)
(72) Inventor: Miller, Peter, Shefford, Bedfordshire SG17 5RY (GB)
(74) Representative: Gibson, Sarah Jane

(57) **Abstract**

A shared transceiver apparatus (44) of a microcontroller (42), and fault tolerant distributed microcontroller system (1) having a shared transceiver apparatus is disclosed for sharing a single duplex link transceiver of a microcontroller in a fault tolerant distributed microcontroller or computing system. The shared transceiver apparatus (44) provides at least one additional output (12,13,57) for the microcontroller output (56), and at least one additional input (21,31,56) for the microcontroller input (54).

## Description

### FIELD OF THE INVENTION

The present invention relates generally to a fault tolerant shared transceiver apparatus and system. More specifically, the invention relates to, for example, sharing a single duplex link transceiver of a microcontroller in a fault tolerant distributed microcontroller or computing system.

### BACKGROUND OF THE DISCLOSURE

Distributed computing or microcontroller systems are used widely in many fields for high precision and safety critical uses, for example, in automotive electronics applications. Braking systems are an example of an automotive electronic application that may utilize distributed microcontroller systems. Currently, distributed microcontroller systems are increasingly being used in braking systems known as "brake-by-wire", in place of mechanical and/or traditional hydraulic based braking systems.

In such high precision and safety critical applications, like the brake-by-wire system, it is important that the systems are tolerant to faults in the system due to, for example, faulty microcontrollers, and/or faulty buses or links connecting the microcontrollers in the system.

There are a number of systems and methods used. For example, fault tolerant distributed computing or microcontroller networks typically require a microcontroller at each node. Some distributed microcontroller networks comprise multiple nodes that are connected together via bi-directional buses or links. In such fault tolerant systems, microcontrollers having two transceiver links that are capable of receiving two or more inputs and transmitting two or more outputs are implemented. However, these multiple transceiver microcontrollers are relatively substantially more expensive then less expensive single transceiver microcontrollers. Additionally, microcontrollers having one transceiver have less power dissipation, and have a higher reliability due to a much simpler design than microcontrollers with two transceivers.

A type of fault tolerant distributed microcontroller network is designed without implementing the multiple transceiver microcontrollers. However, this network requires a separate router that is connected to each node microcontroller, which increases complexity to the system. The router itself requires at least one microcontroller, and this also increases to the complexity of the entire system. Due to this complexity, the network with the router is not very practical for fault tolerant systems having multiple nodes.

Therefore, there is a need in the art for a fault tolerant distributed microcontroller or computing system that shares a single duplex link transceiver of a microcontroller.

### STATEMENT OF THE INVENTION

In accordance with the present invention there is provided a shared transceiver apparatus as claimed in claim 1, and a fault tolerant distributed microcontroller system as claimed in claim 5.

### BRIEF DESCRIPTION OF THE DRAWINGS

Embodiments of the invention will now be more fully described, by way of example, with reference to the drawings, of which:
FIG. 1 shows a schematic block diagram fault tolerant shared transceiver system according to an embodiment of the invention; and
FIG. 2 shows a schematic block diagram of a shared transceiver apparatus of a microcontroller having a single duplex link transceiver in a fault tolerant shared transceiver system of FIG. 1 according to an embodiment of the invention.

### DETAILED DESCRIPTION OF EMBODIMENTS OF THE INVENTION

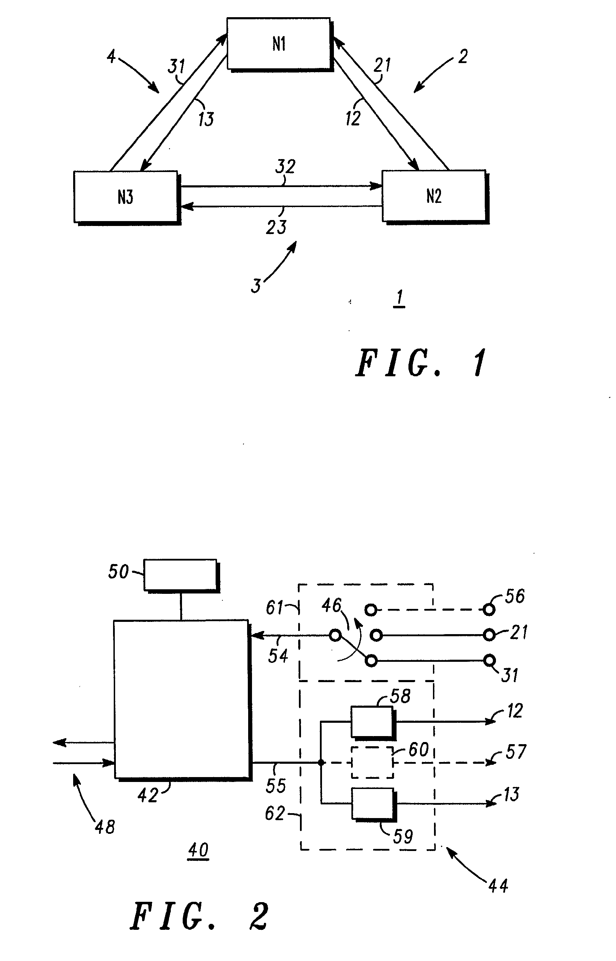

Referring to FIG. 1, in an embodiment of the invention, a fault tolerant distributed microcontroller or computing system having a shared transducer apparatus 1 is shown. In this embodiment, the system 1 is a triplex system or dual ring network that may be used, for example, in a brake control system. The system 1 includes nodes N1-N3, which are connected together via three bi-directional buses or links 2-4,12,13,21,23,31,32. The bi-directional links may be, for example, FIFOs, dual port memories, fast serial links, or the like. The nodes and buses are arranged as a ring or loop. Additionally, each node is synchronised in time with each other node via time synchronisation links 48, as shown in FIG. 2. There are a wide variety of known time synchronisation methods used in distributed computing and/or microcontroller systems that may be used in this application, for example, the internet network time protocol (NTP), scalar, vector or matrix causality approaches, and the like.

In an example of a brake control system, a node is located at each brake actuator near the wheels of the vehicle, with one node located at a foot pedal. While the example shown in FIG. 1 have used three nodes in a ring configuration, it will be appreciated that a system embodying the invention may be expanded to contain more than three nodes, and/or the nodes may be connected in configurations other than ring, such as cross-link configurations, starred configurations, and the like, as discussed in more detail below with reference to FIG. 2.

In operation the links 2-4, and nodes N1-N3 are arranged to send data from each module node in clockwise and anti-clockwise directions around the ring, for example, from N1 to N3 via N2 and from N1 to N2 via N3, etc. The bi-directional links 2-4 may be, for example, FIFOs, dual port memories, fast serial links, or the like. The nodes and buses are arranged as a ring or loop. In such a configuration as this embodiment, each node microcontroller must have several inputs and outputs.

With reference to FIG. 2, a shared transceiver apparatus 44 of a microcontroller 42 having a single duplex link transceiver in a fault tolerant shared transceiver system 1 of FIG. 1 is shown according to an embodiment of the invention. For discussion purposes, the bi-directional links to N1 are shown in FIG. 2. In the embodiment shown in FIG. 1, each node N1-N3 has the fault tolerant shared transceiver apparatus and single link microcontroller system 40. The microcontroller 42 is time synchronised with the other microcontrollers in the network via link 48 as discussed above, and has input link 54 and output link 55. A memory 50, for example RAM and/or ROM and the like, is provided for the microcontroller 42, which may provide instructions and stored data for the microcontroller.

The fault tolerant shared transceiver apparatus 44 comprises an input section 61, connected to microcontroller input link 54, and an output section 62, connected to microcontroller output link 55. The output section may comprise a number of buffers 58,59 in parallel including buffer 60 indicated in broken lines. The buffers 58,59 provide an output for signals from microcontroller 42 transmitted and bound, for example N2 via link 12, and N3 via link 13. The additional buffer 60 and output link 57 is shown to illustrate that the apparatus and system of the invention may be embodied by an apparatus having more than two output links, and/or a system having more than three nodes.

The input section may comprise a switch 46 that is connected to microcontroller input link 54, and controlled by the microcontroller 42. The switch 46 may be selectively switched from incoming signals from, for example, N3 via link 31, or N2 via link 21. The additional input link 56 is shown to illustrate that the apparatus and system of the invention may be embodied by an apparatus having more than two input links, and/or a system having more than three nodes.

In operation, the microcontroller 42 in each node N1-N3 is time synchronised together via link 48. Each microcontroller 42 is also configured and preset with the same data in memory 50, where each node is given particular time slots to transmit data signals to other nodes. Based on the predetermined time slots, to receive the transmitted signal at each time slot, the microcontroller 42 in each node N1-N3 switches switch 46 to the respective link that corresponds to the appropriate node that is scheduled in the time slot to transmit.

It will be appreciated that although the particular embodiments of the invention have been described above, various other modifications and improvements may be made by a person skilled in the art without departing from the scope of the present invention. For example, the shared transceiver apparatus may be implemented on any type of microcontroller, including microcontrollers with two transceivers, to provide additional fault tolerant input and output links for the microcontroller.

## Claims

1. A shared transceiver apparatus for use in a fault tolerant distributed microcontroller system, comprising:
an input section to provide at least one additional input to the microcontroller, the input section having a switch that switchably connects the microcontroller input to one of the at least one additional inputs, the switch being controlled by the microcontroller to selectively switch between the additional inputs to receive incoming signals.

2. A shared transceiver apparatus as claimed in claim 1 further comprising an output section to provide at least one additional output to the microcontroller, the output section having a buffer for each additional output.

3. A shared transceiver apparatus as claimed in claim 2 wherein the switch is controlled by the microcontroller in accordance to predetermined time slots preset in memory of the microcontroller.

4. A shared transceiver apparatus as claimed in claim 2 or 3 wherein the additional inputs and additional outputs are configured to arranged to respectively transmit and receive signals from the microcontroller to at least two other microcontroller inputs and outputs respectively.

5. A fault tolerant distributed microcontroller system comprising a plurality of distributed microcontroller nodes that are time synchronised, and a bi-directional link coupled to each of the plurality of nodes, each node is arranged to transmit signals to the link in a first and second direction, and to receive signals from the link in the first and second directions, wherein each node having a microcontroller with at least one input and output, and a shared transceiver apparatus comprising an input section to provide at least one additional input to the microcontroller, and an output section to provide at least one additional output to the microcontroller, and the input section having a switch that switchably connects the microcontroller input to one of the at least one additional inputs, the switch being controlled by the microcontroller to selectively switch between the additional inputs to receive incoming signals.

6. A fault tolerant distributed microcontroller system as claimed in claim 4 wherein the switch in each shared transceiver apparatus at each node is controlled by the respective microcontroller at each node in accordance to predetermined time slots preset in memory of each microcontroller.

7. A fault tolerant distributed microcontroller system as claimed in claim 5 or 6 wherein the output section having a buffer for each additional output

8. A shared transceiver apparatus substantially as hereinbefore described and with reference to the drawings.

9. A fault tolerant distributed microcontroller system substantially as hereinbefore described and with reference to the drawings.
